# EUROPÄISCHE PATENTSCHRIFT

(11) **EP 0 866 464 B1**
(45) Veröffentlichungstag und Bekanntmachung des Hinweises auf die Patenterteilung: **27.11.2002**
(21) Anmeldenummer: 98104411.8
(22) Anmeldetag: 11.03.1998
(51) Int. Cl.: G11B 33/08, F16F 15/08

(54) **Elastische Halterung für schwingungsempfindliche bzw. schwingungsemittierende Baugruppen**
Elastic holding device for vibration sensitive or vibration emitting assembly
Dispositif de support élastique pour assemblage sensible aux vibrations resp. émettant des vibrations

(30) Priorität: 18.03.1997 DE 19711079
(43) Veröffentlichungstag der Anmeldung: 23.09.1998
(73) Patentinhaber: Schlomka, Georg, 21640 Neuenkirchen (DE)
(72) Erfinder: Schlomka, Georg, 21640 Neuenkirchen (DE)
(74) Vertreter: Seemann, Ralph, Dr. Dipl.-Phys.

(56) Entgegenhaltungen:
- EP-A- 0 210 497
- EP-A- 0 234 661
- EP-A- 0 556 896
- DE-U- 29 609 490
- DE-U- 29 704 870
- FR-A- 1 427 312
- GB-A- 1 157 964
- GB-A- 2 191 626
- GB-A- 2 287 120
- US-A- 4 687 173

## Beschreibung

Die Erfindung betrifft eine schwingungsgedämpfte Einheit gemäß dem Oberbegriff des Patentanspruchs 1. Die Erfindung betrifft ferner ein Verfahren zum Einbauen bzw. Montieren einer Baugruppe in ein Gehäuse, wobei insbesöndere diese Baugruppe nach Einbau elastisch gehaltert ist.

Im modernen Büroalltag werden die Lärmbelästigungen immer größer. Dieses liegt daran, daß in den modernen Büros immer mehr Computer benutzt werden, deren Festplatten einen nicht unerheblichen Lärm erzeugen. Die durch Festplatten erzeugten Schallfrequenzen liegen im wesentlichen in zwei Bereichen. Dieses ist ein niedriger Bereich, der durch das Drehungsbrummen der Festplatten selbst erzeugt wird und bei beispielsweise 7.200 Umdrehungen pro Minute ein Geräusch im Bereich von ungefähr 120 Hz erzeugt.

Hinzu kommen durch Unwucht innerhalb der Festplatte weitere niederfrequente Schwingungen, die erhebliche Amplituden aufweisen können. Zum Teil kommt es zu Überlagerungen der Schwingungen des Drehungsbrummens und der durch Unwucht bedingten Schwingungen, die sich gegenseitig phasenweise verstärken.

Weiterhin entsteht ein breites Schwingungsspektrum im niederfrequenten Bereich dadurch, daß sich die Schreib-/Leseköpfe der Festplatte bei Benützung bewegen. Diese Zugriffe erfolgen unter modernen Betriebssystemen wie Windows 95/Windows NT ausgesprochen häufig, aber nicht gleichmäßig, da diese Betriebssysteme sich der Technik des "virtuellen Speichers" bedienen, bei der der Hauptspeicher auf der Festplatte emuliert wird.

Ein zweiter Bereich betrifft hohe Frequenzen zwischen 3 und 10 kHz, die vornehmlich durch Laufgeräusche des Spindellagers der Festplatte erzeugt werden.

Insbesondere die tieferen Frequenzen pflanzen sich über die Befestigungen der Festplatte auf das Computergehäuse fort, das dabei entsprechende Resonanzfrequenzen aufweist und so die Amplitude der durch die Festplatte erzeugten Schwingungen erhöht. In der Praxis äußern sich diese Schwingungen einerseits durch hörbaren, tieffrequenten Schall, der häufig eine unangenehm auf- und abschwellende Charakteristik aufweist, andererseits in Vibrationen, die sich, inbesondere bei Aufstellen des Computers auf dem Schreibtisch, aber auch über den Fußboden, auf die Arbeitsfläche übertragen. Dies resultiert in höchst unangenehmen Vibrationen bis in die Tastatur und kann bei Streifenmaskenmonitoren, die ebenfalls auf dem Tisch stehen, Bildstörungen hervorrufen (Harfeneffekt).

Aus diesen Gründen ist schon versucht worden, eine Entkopplung zwischen Festplatte und Rechnergehäuse vorzunehmen.

Aus der Zeitschrift c't 1996 Heft 9, S. 288 - 290, ist bekannt, daß Schwingungsdämpfer bei den Plattenbefestigungen eingesetzt werden können. Die dabei verwendeten Schwingungsdämpfer bestehen aus einem Gummi, das an zwei Enden irgendeine Art von Metallgewinde aufweisen muß, deren Metallenden nicht miteinander verbunden sein dürfen. Im Modellbaubedarf sind entsprechende Schwingungsdämpfer bekannt, die sich allerdings höchstens als Standfuß für eine Festplatte eignen. Auch stabilere Ausführungen, bei denen beispielsweise eine vulkanisierte Verbindung zwischen Metall und Gummi für höhere Belastbarkeit sorgt, weisen Nachteile auf, da sie aufgrund der zu weichen Befestigung bei modernen Festplatten weder als Standfuß noch als Hängevorrichtung geeignet sind. Dieses Vorurteil, das von der Verwendung von Gummi wegführt, beruht darauf, daß bei neueren Festplatten keine Schrittmotoren mehr verwendet werden, die festgelegte Abstände zwischen den Tracks anfahren, sondern Servospuren vorgesehen sind, bei denen der Schreib-/Lesekopf der Festplatten durch spezifische Servoalgorithmen auf die entsprechende Spur gebracht wird. Diese Algorithmen gehen davon aus, daß die Platte selbst fest montiert ist und berücksichtigen kein eventuelles Zurückschwingen des Laufwerks nach einer Bewegung der Schreib-/Lesekopfmasse. Aus diesem Grund kann es zu Überschwingungen kommen, weil der Kopf eher auf die Zielspur trifft als erwartet und das Abbremsen zu spät einsetzt. Dieses führt zumindest zu Einbußen in der Geschwindigkeit des Schreib-/Lesevorganges einer Festplatte.

Um dieser Problematik zu entgehen, kann man nun dahergehen und entsprechend dem Artikel aus der eben genannten Zeitschrift die Festplatte selbst beschweren, um diese derart träge zu machen, daß sie selbst keine entsprechenden Schwingungen mehr ausführt. Das Beschweren der Festplatte hat allerdings den Nachteil, daß nunmehr die Festplatte nur noch auf Gummifüße gestellt werden kann, da - bedingt durch die gewünschten Abmessungen und die "Weichheit" der Gummis - die Gummis nicht über genügend Festigkeit verfügen, um das erhöhte Gewicht als Aufhängung zu tragen. Daraus ergibt sich der Nachteil, daß sich eine solchermaßen beschwerte und aufgestellte Festplatte beim Transport des Computers losreißen kann und daher vor dem Transport entweder ausgebaut oder mit einer Transportsicherung versehen werden muß. Zudem hat das Beschweren der Festplatte den Nachteil, daß die Festplatte dann zusammen mit der zusätzlichen Masse sehr schwer und unhandlich wird. Außerdem wird die verwendete Volumeneinheit auch größer.

Eine weitere Problematik der herkömmlichen Entkopplungsmittel ist die, daß die Montage selbst umständlich ist und sehr langsam vonstatten geht. Dabei ist- zu berücksichtigen, daß es verschiedene Standardgehäuse für entsprechende Baugruppen mit verschiedenen Abmessungen gibt, so daß entsprechende Entkopplungsvorrichtungen mit unterschiedlichen Abmessungen bereitgehalten werden müssen. Zudem halten die marktüblichen Standardgehäuse sehr häufig die benötigten Toleranzen nicht ein, was bei starren Einbaurahmen zu einem entsprechenden Nacharbeitungsbedarf führt.

Aus der EP-A-0 234 661 ist ein Motor in einem Gehäuse offenbart, der zum Antrieb eines Schallplattentellers vorgesehen ist, bei dem zum Endkoppeln der durch den Motor entstehenden Vibrationen elastische und vibrationsdämpfende Ringe Verwendung finden, mittels denen ein Gehäuse bzw. eine Halterung des Motors gelagert wird.

Aus der GB-A-1 157 964 ist eine Wäschetrocknereinheit mit einer Aufhängung über gespannte Gummiringe offenbart.

Aus dem Patent US 4,687,173, das zur Definition der Präambel der Patentansprüche 1 und 10 dient, ist eine Vorrichtung bekannt, auf die ein Plattenspieler gestellt werden kann, so daß eine Entkopplung des Plattenspielers von mechanischen und akustischen Vibrationen erreicht wird. Die Entkoppelung wird bewirkt, indem ein oberer Rahmen bzgl. eines feststehenden unteren Rahmens vertikal bewegt wird und die Rahmen mittels mehrerer Gummiringe miteinander verbunden sind. Bei Belastung des oberen Rahmens durch Draufstellen eines Plattenspielers (oder Lautsprechers) bewegt sich der obere Rahmen nach unten und spannt die Ringe.

Es ist somit Aufgabe der vorliegenden Erfindung, eine schwingungsgedämpfte Einheit anzugeben, mit der auch bei verschiedenen Standardgehäusen und Baugruppen in verschiedenen Abmessungen eine unkomplizierte und schnelle Montage ermöglicht wird und mit der die durch Baugruppen erzeugten Schwingungen bzw. durch einen Transport oder ähnliches auf die Baugruppe selbst wirkenden Schwingungen bzw. Stöße reduziert werden. Es ist zudem Aufgabe der vorliegenden Erfindung, ein Verfahren zum Einbauen einer Baugruppe in ein Gehäuse vorzustellen, das im Verhältnis zum Stand der Technik relativ schnell geschehen kann und auch bei verschieden großen Standardgehäusen bzw. Baugruppen mit verschiedenen Abmessungen ohne aufwendige Anpassung an diese Abmessungen durchgeführt werden kann.

Gelöst werden diese Aufgaben durch die Merkmale des Patentanspruchs 1 bzw. 10 Weiterbildungen der Erfindung sind Gegenstand der Unteransprüche.

Erfindungsgemäß ist nämlich erkannt worden, daß eine schwingungsgedämpfte Einheit mit
- wenigstens einer Schwingungen erzeugenden und/oder schwingungsempfindlichen Baugruppe, insbesondere einem Datenträgerlaufwerk,
- einem Gehäuse, in das die Baugruppe einbringbar ist und
- wenigstens einem Befestigungsmittel
dadurch fortgebildet werden kann, daß das wenigstens eine Befestigungsmittel ein längliches Elastomer ist, das endlos oder endlich und an wenigstens einer Stelle zusammengehalten ist, und das die Baugruppe durch das wenigstens eine Befestigungsmittel derart einspannbar ist, daß das wenigstens eine Befestigungsmittel die Baugruppe umspannt.

Durch derartige Befestigungsmittel ist eine sehr einfache Montage sogar ohne Werkzeug möglich. Zudem ist ein derartiges endloses bzw. quasiendloses und/oder längliches Elastomer zur Montage unterschiedlichster Baugruppen geeignet, und zwar sowohl in bezug auf die verschiedenen Außenmaße der verschiedenen Baugruppen als auch der unterschiedlichen Massen und des jeweils gewünschten Dämpfungsverhaltens. Außerdem werden etwaige nicht eingehaltene Toleranzen der Gehäuse ohne weiteres ausgeglichen. Als weiterer Vorteil ist zu vermerken, daß eine derartige Montagevorrichtung äußerst leicht mit geringen Packmaßen ausgestaltet sein kann und damit zur Reduktion von Transportkosten beiträgt. Die erfindungsgemäße schwingungsgedämpfte Einheit vermeidet bzw. verringert zudem die Anwendung umweltschädlicher Verfahren der Galvanik, wie Verzinken oder insbesondere Cadmieren.

Vorzugsweise sind die Befestigungsmittel bei insbesondere bestimmungsgemäßem Gebrauch an wenigstens zwei Stellen des Gehäuses wenigstens mittelbar befestigbar. Durch Spannen über ein Trägerelement sind insbesondere auch Baugruppen befestigbar, die wesentlich größer als das Befestigungsmittel sind.

Durch diese Maßnahme wird die besonders einfache Montage gegeben, da die Baugruppe allein durch die starke Haftreibung der sie umspannenden Befestigungsmittel befestigt ist, folglich also keinerlei Vorrichtungen wie Gewinde oder Schienen an der Baugruppe selbst erforderlich sind. Wenn die Befestigungsmittel unter einer ausreichenden Spannung stehen, wird insbesondere ein spezielles Problem der Lagerung von Computerfestplatten gelöst, bei der nämlich die schwingungsentkoppelte und damit weiche Lagerung in einer bestimmten Richtung, nämlich diejenige, die annähernd der Querachse der Festplatte entspricht, nicht zu weich sein darf, da die Festplatte beim Positionieren ihrer Schreib-/Leseköpfe trägheitsbedingten Drehmomenten ausgesetzt ist. Sofern sich die Festplatte aufgrund eines derartigen Drehmomentes bewegt, kann es nämlich dazu kommen, daß die gewünschte Positionierung nicht erfolgreich ist, was zu einer Korrekturpositionierung führt, wodurch sich wiederum die Zugriffszeit der Festplatte erhöht.

Durch eine entsprechende Ein spannung mittels eines entsprechenden Befestigungsmitfels findet eine unterschiedliche Dämpfung in verschiedenen Richtungen statt. Dieses liegt darin begründet, daß eine Bewegung der Baugruppe parallel zur Spannrichtung des Befestigungsmittels um den Weg x das Befestigungsmittel auch um den Weg x dehnen muß, wohingegen eine Bewegung x in senkrechter Richtung zur Spannrichtung des Befestigungsmittels jedoch eine weit geringere Dehnung des Befestigungsmittels erfordert. Bei dem Beispiel der Festplatte wird dieser Effekt genutzt, um eine weiche Aufhängung zu ermöglichen, ohne eine Bewegung der gesamten Festplatte durch Positionierungsdrehmomente zu erlauben. Weiterhin kann durch Spannen des Befestigungsmittels in einem gewissen Winkel zur Baugruppe die Richtung der härteren Dämpfung genau auf die Wirkrichtung der Positionierungsdrehmomente ausgerichtet werden. Dieser Effekt könnte im übrigen auch dazu verwendet werden, durch eine entsprechende senkrechte Spannung der Befestigurigsmittel den Gewichtsanteil der Baugruppe zu neutralisieren. Daraus resultierte ein in jede beliebige Richtung gleichmäßiges Dämpfungsverhalten.

Bei der vorgenannten Einspannung der Baugruppe durch die Befestigungsmittel kann ein Befestigungsmittel Verwendung finden, bei dem das Elastomer flach ausgebildet ist. Hierbei würde dann eine flache Fläche dies Elastomers an wenigstens einer Seite der Baugruppe anliegen. Vorzugsweise werden allerdings wenigstens zwei Befestigungsmittel verwendet, bei denen das Elastomer selbst einen im wesentlichen kreisförmigen Querschnitt hat.

Das Dämpfungsverhalten der schwingungsgedämpften Einheit kann vorzugsweise dadurch eingestellt werden, daß die Spannung der Befestigungsmittel durch geeignete Spannmittel und/oder durch Auswahl des Materials und der Länge des Befestigungsmittels einstellbar ist. Weiter vorzugsweise ist dieses Spannmittel ein Kabelbinder. Es kann allerdings auch vorgesehen sein, die Befestigungsmittel direkt an den Enden des Gehäuses durch beispielsweise Umschlingen einer sich an einer Gehäusewand befindenden Nase anzubringen, wobei daraufhin durch Einstellung der Länge die Spannung einstellbar ist.

Ferner kann die Einstellung der Vorspannung durch beispielsweise einen oder mehrere Kabelbinder erfolgen, mit deren Hilfe der durch die Baugruppe aufgespreizte Teil der Befestigungsmittel nach Bedarf umschlungen und zusammengezogen wird, oder die Spannung wird durch Verdrillen des Befestigungsmittels erhöht. Wenn vorzugsweise die die Befestigungsmittel spannende Zugkraft ein mehrfaches der Gewichtskraft der zu befestigenden Baugruppe ist, treten insbesondere die Probleme bei der Lagerung von Computerfestplatten nicht mehr auf.

Wenn vorzugsweise die Befestigungsmittel eine zähe Elastizität aufweisen, kommt es nicht zu einem sogenannten Jo-Jo-Effekt, bei der sich die Baugruppe auf einer gewissen Frequenz einschwingt und diese Schwingung beibehält. Durch die zähe Elastizität wird also eine Dämpfung auch einer mechanischen Schwingung erreicht.

Ein auf dem Gebiet der Dämpfungstechnik, insbesondere der Schalldämpfungstechnik, tätiger Fachmann kann aus der Kenntnis der Eigenschwingung der Baugruppe ohne weiteres entnehmen, aus welchem Material das Befestigungsmittel bestehen sollte, bzw. kann er bei entsprechender Vorgabe der Dämpfungscharakteristik dieses bestimmen. Vorzugsweise sind die Befestigungsmittel im wesentlich aus Perbunan und/oder Viton. Dieses Material zeichnet sich durch ein zähelastisches Verhalten aus, das in einem Temperaturbereich von -30°C bis wenigstens 100°C beständig ist.

Weiter vorzugsweise sind die Befestigungsmittel O-Ringe, die im Handel ohne weiteres erhältlich sind.

Wenn zur weiteren Schwingungsdämpfung das Gehäuse mit Platten bzw. Matten ausgekleidet ist, wobei die Platten bzw. Matten eine rauhe bzw. poröse Oberfläche aufweisen und insbesondere ein Gemisch aus einem granularen gummiartigen bzw. neoprenartigen Material mit einem granularen faserartigen Material, insbesondere Kork, ausgestaltet sind, werden nicht nur die tiefen Frequenzen weiter gedämpft, sondern auch hohe Frequenzen erfahren eine Dämpfung. Es ist nämlich erkannt worden, daß ein besonders gutes Ergebnis in Sachen Lärm-Vibrationsminderung dadurch erreicht wird, daß das Gehäuse, an dem die Befestigungsmittel wenigstens mittelbar angebracht sind, eine ausreichende Masse besitzt, deren Schwerpunkt der dem Anbringungsort der zu dämpfenden Baugruppe möglichst nahe liegt. Aufgrund der allgemeinen Tendenz zum Billigbau weisen die üblichen Gehäuse eine immer geringere Eigenmasse auf. Zum Teil werden Kunststoffgehäuse verwendet, die zum Zwecke der Kapselung von elektromagnetischer Strahlung mit einem sehr dünnen Blech bzw. sehr dünnen aufgebrachten Schicht, beispielsweise aus Aluminium, ausgekleidet sind. Daher ist die Gesamtmasse der üblichen Gehäuse erstens nicht ausreichend für eine gute Dämpfung und zweitens zum Teil mit einem Schwerpunkt ausgestattet, der nicht in Übereinstimmung mit der zu dämpfenden Baugruppe ist. Wenn nun das Gehäuse im wesentlichen vollständig mit Platten bzw. Matten ausgekleidet ist, wobei das verwendete Material insbesondere eine spezifische Dichte von 0,6 g/cm³ hat, wird eine starke Dämpfung von hochfrequentem Lärm und eine Vermeidung von Klapper- und Dröhngeräuschen erzielt. Würde eine Schalldämmung nur mit Schallschluckmatten durchgeführt werden, so würde zwar der Luftschall gemindert werden, die starre Übertragung von Schwingungen, und zwar auch der hochfrequenten durch das Metall des Gehäuses, würde allerdings die Dämpfung des Auskleidungsmaterials sozusagen umgehen. Dabei ist zu bedenken, daß die großen Gehäuseseiten sehr gute Abstrahler für Schall sind.

Es kann ein endloses bzw. quasiendloses und/oder längliches Elastomer zur Befestigung von wenigstens einer Baugruppe in einem Gehäuse und zur Entkopplung von Schwingungen, insbesondere von niederfrequentem Schall, verwendet.

Vorteilhafterweise ist eine Computeranlage mit wenigstens einer schwingungsgedämpften Einheit vorgesehen.

Erfindungsgemäß wird ein Verfahren zum Einbauen einer Baugruppe in ein Gehäuse mit den Verfahrens-schritten nach Patentanspruch 20 angegeben:
- Bereitstellen wenigstens eines Befestigungsmittels, das ein längliches Elastomer ist, das endlos oder endlich und an wenigstens einer Stelle zusammengehalten ist,
- Befestigen des Befestigungsmittels an einem Gehäuse an wenigstens zwei Stellen des Gehäuses,
- Einschieben bzw. Anbringen der Baugruppe zwischen bzw. an das bzw. die Befestigungsmittel dergestalt, daß das bzw. die Befestigungsmittel (40) an wenigstens einer Seite (21, 22) der Baugruppe (20) anliegt bzw. anliegen.

Dieses Verfahren ist äußerst schnell und ermöglicht den Einbau von Baugruppen in ein Gehäuse, selbst wenn die Baugruppe an wenigstens zwei Seiten durch das bzw. die befestigungsmittel eingespannt ist.

Vorzugsweise ist als zusätzlicher Verfahrensschritt angegeben, daß mittels Spannmitteln die Spannung des Befestigungsmittels auf einen gewünschten Wert eingestellt wird. Durch diesen Verfahrensschritt sollen gewünschte Schwingungscharakteristika eingestellt werden.

Im Rahmen dieser Erfindung kann die Baugruppe direkt an dem Gehäuse beispielsweise eines Computers angebracht werden, die Baugruppe kann allerdings auch innerhalb eines für die Baugruppe vorgesehenen Gehäuses schwingungsgedämpft aufgehängt werden, woraufhin dieses Gehäuse an das Gehäuse eines Computers angebracht werden kann.

Die Erfindung beschränkt sich nicht auf schwingungsgedämpfte Einheiten, die im wesentlichen mit Computern zu tun haben, sondern es können auch andere schwingungsgedämpfte Einheiten wie beispielsweise CD-Spieler oder Massagegeräte betroffen sein.

Im Rahmen dieser Erfindung bedeutet quasiendlos insbesondere auch ein endliches Stück, das an wenigstens einer Stelle derart zusammengehalten wird, daß sich ein im wesentlichen endloses Stück ergibt.

Im Rahmen dieser Erfindung bedeutet Datenträgerlaufwerk insbesondere Festplattenlaufwerk, Diskettenlaufwerk, CD-Laufwerk, und Computer bedeutet insbesondere elektronische Datenverarbeitungsanlage, Personal Computer, Workstation, Arbeitsplatzcomputer, Computeranlage, Rechenanlage usw.

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen bezüglich der Offenbarung aller im Text nicht näher erläuterten erfindungsgemäßen Einzelheiten ausdrücklich verwiesen wird. Es zeigt:

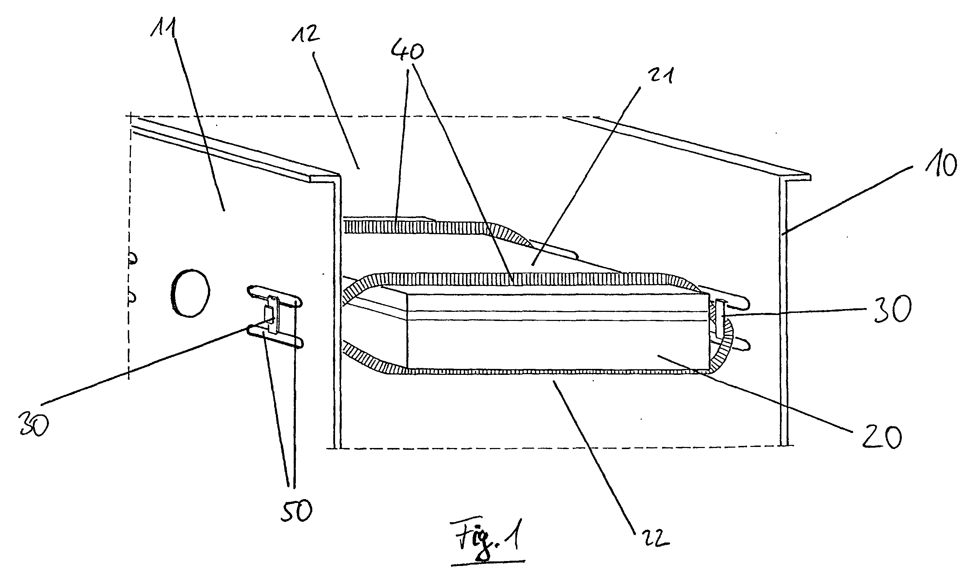

- Fig. 1: eine erfindungsgemäße schwingungsgedämpfte Einheit in perspektivischer Darstellung und schematisch.

Fig. 1 zeit eine schwingungsgedämpfte Einheit in montiertem Stadium. Ein Teil eines Gehäuses 12 eines Computers mit den Gehäusewänden 10 und 11 ist dargestellt. In die Gehäusewände 10 und 11 sind Langlöcher 50 und weitere Löcher eingearbeitet, die zur Befestigung von Bauteilen oder aber zur Belüftung dienen. Ein Datenträgerlaufwerk 20 und insbesondere eine Festplatte ist zwischen zwei O-Ringen 40 eingespannt. Die O-Ringe 40 sind mit Kabelbindern 30 an den Langlöchern 50 befestigt, mit denen die Vorspannung der O-Ringe 40 eingestellt werden kann. Die O-Ringe 40 schmiegen sich unter Spannung an die Oberseite 21 und Unterseite 22 des Datenträgerlaufwerks 20. Aufgrund dieser Ausgestaltung ist ein seitliches Verdrehen oder Verschieben nur noch sehr bedingt möglich. Es kann im wesentlichen nur noch zu Schwingungen in der Hoch- und Längsachse kommen. Diese ist allerdings durch das Material des O-Ringes 40 deutlich gedämpft. Somit kommt es zu keinen Schädigungen des Datenträgerlaufwerks 20 bei etwaigen Stößen. Außerdem ist das Datenträgerlaufwerk 20, das Schall erzeugt, nur über das Material des O-Ringes 40 mit dem Gehäuse 12 verbunden, so daß die erzeugten Schwingungen nur in geringem Maße übertragen werden. Eine Schalldämpfung findet im wesentlichen für niedrige Frequenzen statt, da höhere Frequenzen über die Luft übertragen werden.

In einer anderen Ausgestaltung, die nicht dargestellt ist, wird ein Datenträgerlaufwerk entsprechend wie in Fig. 1 in ein Gehäuse eingebracht, das selbst als Standardgehäuse in ein Gehäuse eines Computers eingebracht werden kann. Ein derartiges Standardgehäuse kann auf die wesentlichen Bestandteile reduziert werden. So wäre an sich ein metallener U-Träger ausreichend, der entsprechende Einkerbungen aufweist, über die die O-Ringe 40 gespannt werden können.

Durch Einbringen von einer Vielzahl von Ringen in den unteren Bereich des U-Trägers ergibt sich ein flaches Dämpfungselement, das insbesondere auch für schwere Baugruppen geeignet ist wie beispielsweise die seitliche Dämpfung von Waschmaschinen oder die Dämpfung von Sitzen und Stühlen. In diesem Fall kann das Dämpfungselement als Anschlagdämpfer wirken, wenn ein Stoß auf die Baugruppe ausgeübt wird, der die Baugruppe soweit auslenkt, daß sie gegen den U-Träger schlagen würde.

### Bezugszeichenliste

- 10: Gehäusewand
- 11: Gehäusewand
- 12: Gehäuse
- 20: Datenträgerlaufwerk
- 21: Oberseite
- 22: Unterseite
- 30: Kabelklemme
- 40: O-Ring
- 50: Langloch

## Patentansprüche

1. Schwingungsgedämpfte Einheit mit wenigstens einer Schwingungen erzeugenden und/oder schwingungsempfindlichen Baugruppe (20), insbesondere einem Datenträgerlaufwerk, einem Gehäuse (12), in das die Baugruppe (20) einbringbar ist, und wenigstens einem Befestigungsmittel (40), wobei das wenigstens eine Befestigungsmittel (40) ein längliches Elastomer ist, das endlos ist oder endlich und an wenigstens einer Stelle zusammengehalten ist, **dadurch gekennzeichnet, daß** die Baugruppe (20) durch das wenigstens eine Befestigungsmittel (40) derart eingespannt ist, daß das wenigstens eine Befestigungsmittel (40) die Baugruppe (20) umspannt, wobei das wenigstens eine Befestigungsmittel (40) an wenigstens zwei Stellen des Gehäuses (12) befestigt ist.

2. Schwingungsgedämpfte Einheit nach Anspruch 1, **dadurch gekennzeichnet, daß** die Spannung des wenigstens einen Befestigungsmittels (40) durch geeignete Spannmittel (30) und/oder durch Auswahl des Materials und der Länge des Befestigungsmittels einstellbar ist.

3. Schwingungsgedämpfte Einheit nach Anspruch 2, **dadurch gekennzeichnet, daß** die Spannmittel (30) Kabelbinder sind.

4. Schwingungsgedämpfte Einheit nach einem oder mehreren der Ansprüche 1 bis 3, **dadurch gekennzeichnet, daß** die das wenigstens eine Befestigungsmittel (40) spannende Zugkraft ein mehrfaches der Gewichtskraft der zu befestigenden Baugruppe (20) ist.

5. Schwingungsgedämpfte Einheit nach einem oder mehreren der Ansprüche 1 bis 4, **dadurch gekennzeichnet, daß** das wenigstens eine Befestigungsmittel (40) eine derart zähe Elastizität aufweist, daß eine mechanische Schwingung der einspannbaren Baugruppe (20) gedämpft wird.

6. Schwingungsgedämpfte Einheit nach einem oder mehreren der Ansprüche 1 bis 5, **dadurch gekennzeichnet, daß** die Befestigungsmittel (40) Frequenzen im Bereich bis 1 kHz dämpfen.

7. Schwingungsgedämpfte Einheit nach einem oder mehreren der Ansprüche 1 bis 6, **dadurch gekennzeichnet, daß** die Befestigungsmittel (40) im wesentlichen aus Perbunan und/oder Viton sind.

8. Schwingungsgedämpfte Einheit nach einem oder mehreren der Ansprüche 1 bis 7, **dadurch gekennzeichnet, daß** die Befestigungsmittel (40) O-Ringe sind.

9. Schwingungsgedämpfte Einheit nach einem oder mehreren der Ansprüche 1 bis 8, **dadurch gekennzeichnet, daß** zur weiteren Schwingungsdämpfung das Gehäuse (12) mit Platten bzw. Matten ausgekleidet ist, wobei die Platten bzw. Matten eine rauhe bzw. poröse Oberfläche aufweisen und insbesondere ein Gemisch aus einem granularen gummiartigen bzw. neoprenartigen Material mit einem granularen faserartigen Material, insbesondere Kork, ist.

10. Schwingungsdämpfendes Gehäuse für wenigstens eine Schwingungen erzeugende und/oder schwingungsempfindliche Baugruppe (20), insbesondere einem Datenträgerlaufwerk, wobei die Baugruppe (20) in das Gehäuse (12) einbringbar ist, und wenigstens einem Befestigungsmittel (40), wobei das wenigstens eine Befestigungsmittel (40) ein längliches Elastomer ist, das endlos oder endlich und an wenigstens einer Stelle zusammengehalten ist, **dadurch gekennzeichnet, daß** die Baugruppe (20) durch das wenigstens eine Befestigungsmittel (40) derart einspannbar ist, daß das wenigstens eine Befestigungsmittel (40) die Baugruppe (20) umspannt, wobei das wenigstens eine Befestigungsmittel (40) an wenigstens zwei Stellen des Gehäuses (12) befestigt ist.

11. Schwingungsdämpfendes Gehäuse nach Anspruch 10, **dadurch gekennzeichnet, daß** die Spannung des wenigstens einen Befestigungsmittels (40) durch geeignete Spannmittel (30) und/oder durch Auswahl des Materials und der Länge des Befestigungsmittels einstellbar ist.

12. Schwingungsdämpfendes Gehäuse nach Anspruch 11, **dadurch gekennzeichnet, daß** die Spannmittel (30) Kabelbinder sind.

13. Schwingungsdämpfendes Gehäuse nach einem oder mehreren der Ansprüche 10 bis 12, **dadurch gekennzeichnet, daß** die das wenigstens eine Befestigungsmittel (40) spannende Zugkraft ein mehrfaches der Gewichtskraft der zu befestigenden Baugruppe (20) ist.

14. Schwingungsdämpfendes Gehäuse nach einem oder mehreren der Ansprüche 10 bis 13, **dadurch gekennzeichnet, daß** das wenigstens eine Befestigungsmittel (40) eine derart zähe Elastizität aufweist, daß eine mechanische Schwingung der einspannbaren Baugruppe (20) gedämpft wird.

15. Schwingungsdämpfendes Gehäuse nach einem oder mehreren der Ansprüche 10 bis 14, **dadurch gekennzeichnet, daß** die Befestigungsmittel (40) Frequenzen im Bereich bis 1 kHz dämpfen.

16. Schwingungsdämpfendes Gehäuse nach einem oder mehreren der Ansprüche 10 bis 15, **dadurch gekennzeichnet, daß** die Befestigungsmittel (40) im wesentlichen aus Perbunan und/oder Viton sind.

17. Schwingungsdämpfendes Gehäuse nach einem oder mehreren der Ansprüche 10 bis 16, **dadurch gekennzeichnet, daß** die Befestigungsmittel (40) O-Ringe sind.

18. Schwingungsdämpfendes Gehäuse nach einem oder mehreren der Ansprüche 10 bis 17, **dadurch gekennzeichnet, daß** zur weiteren Schwingungsdämpfung das Gehäuse (12) mit Platten bzw. Matten ausgekleidet ist, wobei die Platten bzw. Matten eine rauhe bzw. poröse Oberfläche aufweisen und insbesondere ein Gemisch aus einem granularen gummiartigen bzw. neoprenartigen Material mit einem granularen faserartigen Material, insbesondere Kork, ist.

19. Computeranlage mit wenigstens einer schwingungsgedämpften Einheit nach einem oder mehreren der Ansprüche 1 bis 9 oder mit wenigstens einem schwingungsdämpfenden Gehäuse nach einem oder mehreren der Ansprüche 10 bis 18.

20. Verfahren zum Einbauen einer Baugruppe (20) in ein Gehäuse (12) mit den folgenden Verfahrensschritten:
- Befestigen wenigstens eines Befestigungsmittels (40), das ein längliches Elastomer ist, das endlos oder endlich ist und an wenigstens einer Stelle zusammengehalten ist, an wenigstens zwei Stellen des Gehäuses (12), und
- Einschieben der Baugruppe (20) zwischen das wenigstens eine Befestigungsmittel (40) dergestalt, daß das wenigstens eine Befestigungsmittel (40) die Baugruppe (20) umspannt.

21. Verfahren nach Anspruch 20, **dadurch gekennzeichnet, daß** als zusätzlicher Verfahrensschritt mittels Spannmitteln (30) die Spannung des Befestigungsmittels (40) auf einen gewünschten Wert eingestellt wird.

22. Verfahren nach Anspruch 20 und/oder 21, **dadurch gekennzeichnet, daß** wenigstens zwei Befestigungsmittel (40) vorgesehen sind und die Baugruppe zwischen die Befestigungsmittel eingeschoben wird.

## Claims

1. Vibration-suppressed unit with one or more vibration-emitting and/or vibration-sensitive subassemblies (20), in particular a data carrier drive, a case (12) into which the subassembly (20) can be inserted and one or more means of attachment (40) whereby the one or more means of attachment (40) is a long elastomer which is continuous or open-ended and held together at one or more points, **characterized in that** the subassembly (20) is held by the one or more means of attachment (40) in such a way that the one or more means of attachment (40) encircles the subassembly (20), whereby the one or more means of attachment (40) is attached to two or more points on the case (12).

2. Vibration-suppressed unit according to Claim 1, **characterized in that** the tension of the one or more means of attachment (40) can be adjusted by appropriate means of tensioning (30) and/or by choice of material and length of means of attachment.

3. Vibration-suppressed unit according to Claim 2, **characterized in that** the means of tensioning (30) are cable ties.

4. Vibration-suppressed unit according to one or more of the claims 1 to 3, **characterized in that** the tensile force tensioning the one or more means of attachment (40) is several times the weight of the subassembly (20) being stabilised.

5. Vibration-suppressed unit according to one or more of the claims 1 to 4, **characterized in that** the one or more means of attachment (40) displays sufficiently strong elasticity to absorb mechanical vibration in the subassembly (20) being held.

6. Vibration-suppressed unit according to one or more of the claims 1 to 5, **characterized in that** the means of attachment (40) dampen frequencies in the range up to 1 kHz.

7. Vibration-suppressed unit according to one or more of the claims 1 to 6, **characterized in that** the means of attachment (40) are essentially made of Perbunan and/or Viton.

8. Vibration-suppressed unit according to one or more of the claims 1 to 7, **characterized in that** the means of attachment (40) are O-rings.

9. Vibration-suppressed unit according to one or more of the claims 1 to 8, **characterized in that**, for increased vibration suppression, the case (12) is lined with plates or matting whereby the plates or matting have a rough or porous surface and, more particularly, are a mixture of a granular rubber-type or neoprene-type material and a granular fibrous material, especially cork.

10. Vibration-suppressing case for one or more vibration-emitting and/or vibration-sensitive subassemblies (20), in particular a data carrier drive, whereby the subassembly (20) can be inserted into the case (12), and one or more means of attachment (40) whereby the one or more means of attachment (40) is a long elastomer which is continuous or open-ended and held together at one or more points, **characterized in that** the subassembly (20) can be held by the one or more means of attachment (40) in such a way that the one or more means of attachment (40) encircles the subassembly (20), whereby the one or more means of attachment (40) is attached to two or more points on the case (12).

11. Vibration-suppressing case according to Claim 10, **characterized in that** the tension of the one or more means of attachment (40) can be adjusted by appropriate means of tensioning (30) and/or by choice of material and length of means of attachment.

12. Vibration-suppressing case according to Claim 11, **characterized in that** the means of tensioning (30) are cable ties.

13. Vibration-suppressing case according to one or more of the claims 10 to 12, **characterized in that** the tensile force tensioning the one or more means of attachment (40) is several times the weight of the subassembly (20) being stabilised.

14. Vibration-suppressing case according to one or more of the claims 10 to 13, **characterized in that** the one or more means of attachment (40) displays sufficiently strong elasticity to absorb mechanical vibration in the subassembly (20) being stabilised.

15. Vibration-suppressing case according to one or more of the claims 10 to 14, **characterized in that** the means of attachment (40) dampen frequencies in the range up to 1 kHz.

16. Vibration-suppressing case according to one or more of the claims 10 to 15, **characterized in that** the means of attachment (40) are essentially made of Perbunan and/or Viton.

17. Vibration-suppressing case according to one or more of the claims 10 to 16, **characterized in that** the means of attachment (40) are O-rings.

18. Vibration-suppressing case according to one or more of the claims 10 to 17, **characterized in that**, for increased vibration suppression, the case (12) is lined with plates or matting whereby the plates or matting have a rough or porous surface and, more particularly, are a mixture of a granular rubber-type or neoprene-type material and a granular fibrous material, especially cork.

19. Computer system with at least one vibration-suppressed unit according to one or more of the claims 1 to 9 or with at least one vibration-suppressing case according to one or more of the claims 10 to 18.

20. Method for inserting a subassembly (20) into a case (12) incorporating the following stages:
- attach one or more means of attachment (40), which is a long elastomer, continuous or open-ended held together at one or more points, to two or more points on the case (12), and
- insert the subassembly (20) between the one or more means of attachment (40) in such a way that the one or more means of attachment (40) encircles the subassembly (20).

21. Method according to Claim 20, **characterized in that**, as an additional step, the tension of the means of attachment (40) is adjusted to a desired value by a means of tensioning (30).

22. Method according to Claim 20 and/or 21, **characterized in that** at least two means of attachment (40) are required and the subassembly is inserted between the means of attachment.

## Revendications

1. Unité amortissant les vibrations avec au moins un ensemble (20) émettant des vibrations et/ou sensible aux vibrations, en particulier un lecteur de support de données, un boîtier (12), dans lequel l'ensemble (20) peut être inséré, et au moins un moyen de fixation (40), l'au moins un moyen de fixation (40) étant un élastomère de forme oblongue en boucle ou à bouts libres et maintenu à au moins un endroit, **caractérisé en ce que** l'ensemble (20) est serré par au moins un moyen de fixation (40) de telle sorte qu'au moins un moyen de fixation (40) enserre l'ensemble (20), d'au moins un moyen de fixation (40) étant fixé à au moins deux endroits du boîtier (12).

2. Unité amortissant les vibrations selon la revendication 1, **caractérisée en ce que** la tension de l'au moins un moyen de fixation (40) est ajustable grâce à des moyens de mise en tension (30) appropriés et/ou grâce au choix du matériau et de la longueur du moyen de fixation.

3. Unité amortissant les vibrations selon la revendication 2, **caractérisée en ce que** les moyens de mise en tension (30) sont des attaches de câbles.

4. Unité amortissant les vibrations selon une ou plusieurs des revendications 1 à 3, **caractérisée en ce que** la force de traction de l'au moins un moyen de fixation (40) est un multiple du poids de l'ensemble (20) à fixer.

5. Unité amortissant les vibrations selon une ou plusieurs des revendications 1 à 4, **caractérisée en ce que** l'au moins un moyen de fixation (40) présente une élasticité dure de façon à ce qu'une vibration mécanique de l'ensemble (20) pouvant être serré soit amortie.

6. Unité amortissant les vibrations selon une ou plusieurs des revendications 1 à 5, **caractérisée en ce que** les moyens de fixation (40) amortissent des fréquences dans un domaine jusqu'à 1 kHz.

7. Unité amortissant les vibrations selon une ou plusieurs des revendications 1 à 6, **caractérisée en ce que** les moyens de fixation (40) sont majoritairement constitués de Perbunan et/ou de Viton.

8. Unité amortissant les vibrations selon une ou plusieurs des revendications 1 à 7, **caractérisée en ce que** les moyens de fixation (40) sont des anneaux toriques.

9. Unité amortissant les vibrations selon une ou plusieurs des revendications 1 à 8, **caractérisée en ce que** le boîtier (12) est revêtu de plaques ou de nattes pour un amortissement supplémentaire des vibrations, les plaques ou nattes présentant une surface rugueuse ou poreuse étant sont constituées en particulier d'un mélange de matériau granulaire de type caoutchouc ou néoprène avec un matériau granulaire de type fibreux, en particulier du liège.

10. Boîtier amortisseur de vibrations pour au moins un ensemble (20) émettant des vibrations et/ou sensible aux vibrations, en particulier d'un lecteur de support de données, l'ensemble (20) pouvant être inséré dans le boîtier (12) et au moins un moyen de fixation (40), l'au moins un moyen de fixation (40) étant un élastomère de forme oblongue en boucle ou à bouts libres, et maintenu au moins à un endroit, **caractérisé en ce que** l'ensemble (20) peut être serré à l'aide de l'au moins un moyen de fixation (40) de telle sorte que l'au moins un moyen de fixation (40) enserre l'ensemble (20), l'au moins un moyen de fixation (40) étant fixé à au moins deux endroits du boîtier (12).

11. Boîtier amortisseur de vibrations selon la revendication 10, **caractérisé en ce que** la tension de l'au moins un moyen de fixation (40) est ajustable grâce à des moyens de mise en tension (30) appropriés et/ou grâce au choix du matériau et de la longueur du moyen de fixation.

12. Boîtier amortisseur de vibrations selon la revendication 11, **caractérisé en ce que** les moyens de mise en tension (30) sont des attaches de câbles.

13. Boîtier amortisseur de vibrations selon une ou plusieurs des revendications 10 à 12, **caractérisé en ce que** la force de traction de l'au moins un moyen de fixation (40) est un multiple du'poids de l'ensemble (20) à fixer.

14. Boîtier amortisseur de vibrations selon une ou plusieurs des revendications 10 à 13, **caractérisé en ce que** l'au moins un moyen de fixation (40) présente une élasticité dure, de façon à ce qu'une vibration mécanique de l'ensemble (20) pouvant être serré est amortie.

15. Boîtier amortisseur de vibrations selon une ou plusieurs des revendications 10 à 14, **caractérisé en ce que** les moyens de fixation (40) amortissent des fréquences jusqu'à 1 kHz.

16. Boîtier amortisseur de vibrations selon une ou plusieurs des revendications 10 à 15, **caractérisé en ce que** les moyens de fixation (40) sont constitués principalement de Perbunan et/ou de Viton.

17. Boîtier amortisseur de vibrations selon une ou plusieurs des revendications 10 à 16, **caractérisé en ce que** les moyens de fixation (40) sont des anneaux toriques.

18. Boîtier amortisseur de vibrations selon une ou plusieurs des revendications 10 à 17, **caractérisé en ce que** le boîtier (12) est revêtu de plaques ou de nattes pour un amortissement supplémentaire des vibrations, les plaques ou nattes présentant une surface rugueuse ou poreuse et étant constituées en particulier d'un mélange de matériau granulaire de type caoutchouc ou néoprène avec un matériau granulaire de type fibreux, en particulier du liège.

19. Installation informatique avec au moins une unité amortissant les vibrations selon une ou plusieurs des revendications 1 à 9 ou avec au moins un boîtier amortisseur de vibrations selon une ou plusieurs des revendications 10 à 18.

20. Procédé de montage d'un ensemble (20) dans un boîtier (12), comportant les étapes suivantes :
- fixation d'au moins un élément de fixation (40) qui est un élastomère de forme oblongue, en boucle ou à bouts libres et qui est maintenu, à au moins un endroit, à au moins deux endroits du boîtier (12) et
- insertion de l'ensemble (20) entre au moins un moyen de fixation (40) de telle sorte qu'au moins un moyen de fixation (40) enserre l'ensemble (20).

21. Procédé selon la revendication 20, **caractérisé en ce que**, comme étape supplémentaire, le serrage du moyen de fixation (40) est ajusté à la valeur souhaitée grâce à des moyens de mise en tension (30).

22. Procédé selon la revendication 20 et/ou 21, **caractérisé en ce qu'**au moins deux moyens de fixation (40) sont prévus et que l'ensemble est inséré entre les moyens de fixation.
